# FASCICULE DE BREVET EUROPEEN

(11) **EP 1 790 428 B1**
(45) Date de publication et mention de la délivrance du brevet: **20.01.2010**
(21) Numéro de dépôt: 06301155.5
(22) Date de dépôt: 17.11.2006
(51) Int. Cl.: B23K 26/38, B23K 26/40, B23K 26/14

(54) **Procédé de coupage avec un laser à fibre d'acier inoxydable**
Process of cutting by a laser beam a workpiece in stainless steel with using a fibre containing ytterbium
Verfahren zum Laserschnieden eines Werkstückes in rostfreien Stahl mit einer Yteerbium enthaltenden Faser

(30) Priorité: 25.11.2005 FR 0553607
(43) Date de publication de la demande: 30.05.2007
(73) Titulaire: AIR LIQUIDE WELDING FRANCE, 75007 Paris (FR); L'AIR LIQUIDE, Société Anonyme pour l'Etude et l'Exploitation des Procédés Georges Claude, 75007 Paris (FR)
(72) Inventeur: Chouf, Karim, 92300 Levallois Perret (FR); Maazaoui, Hakim, 95800 Cergy St Christophe (FR); Briand, Francis, 75009 Paris (FR)
(74) Mandataire: Pittis, Olivier

(56) Documents cités:
- WO-A-2005/074573
- US-A1- 2004 089 643
- US-A1- 2005 041 697
- US-A1- 2005 169 326
- US-B1- 6 208 458

## Description

L'invention porte sur un procédé de coupage par faisceau laser d'acier inoxydable utilisant une source laser de type fibre à ytterbium conformément au préambule de la revendication 1 (voir, par example, US-A-6,208,458).

Le coupage par faisceau laser en utilisant une source laser de type CO₂ pour générer un faisceau laser de longueur d'onde égale à 10.6 µm et d'une puissance allant jusqu'à 6 kW actuellement, est largement répandu dans l'industrie. Ce procédé est notamment utilisé pour le coupage des aciers inoxydables.

Toutefois, les vitesses de coupe qui peuvent être atteintes et la qualité de coupe qui en résulte sont très variables selon le matériau à couper et, par ailleurs, selon les paramètres du procédé de coupage adoptés, tels que nature du gaz d'assistance, diamètre du faisceau focalisé et puissance du laser incidente...

Ainsi, les lasers de type CO₂ ne peuvent être utilisés avec des gaz d'assistance possédant un potentiel d'ionisation faible, tels que l'argon par exemple, sans risque de générer des plasmas parasite qui peuvent nuire au procédé

En outre, les lasers de type CO₂ sont limités en puissance, ce qui impacte directement la vitesse de coupe.

De plus, le fait de devoir guider le faisceau laser depuis le générateur laser jusqu'à la tête de focalisation, c'est-à-dire la tête de coupe, présente des inconvénients, notamment au niveau de l'alignement des optiques du chemin optique. En effet, les optiques de guidage sont généralement des miroirs en cuivre poli et/ou revêtu et la position de ces derniers déterminent le chemin emprunté par le faisceau laser. De ce fait, l'alignement de ces miroirs doit être parfait pour assurer une entrée optimale du faisceau laser dans la tête de focalisation ou tête de coupe. Or, le réglage de la position de ces miroirs est généralement assuré par des moyens mécaniques, lesquels peuvent facilement se dérégler en fonction du temps, de l'usure des pièces et des conditions environnementales, notamment la température ambiante, le taux d'humidité...

De plus, le chemin optique du faisceau doit impérativement être maintenu dans une atmosphère inerte pour éviter toute pollution et conservé un milieu d'indice optique constant nécessaire à la bonne propagation du faisceau. Ces conditions permettent de conserver les propriétés relatives au diamètre du faisceau et à la répartition transversale de l'énergie dans ce dernier, et de conserver des propriétés de qualité du faisceau satisfaisantes pour le procédé, le facteur de qualité (BPP) des faisceaux laser CO₂ de forte puissance mis en oeuvre en découpe étant généralement compris entre 3 mm.mrad et 6 mm.mrad. Une telle atmosphère permet aussi de préserver les optiques de guidage et éviter leur détérioration.

Or, cela n'est pas pratique au plan industriel et engendre des coûts supplémentaires.

Pour tenter de pallier ces problèmes, il a été proposé de réaliser la découpe de l'inox avec un dispositif laser de type Nd:YAG au sein duquel le faisceau est généré par un résonateur contenant un milieu amplificateur solide, c'est-à-dire à barreau de néodyme (Nd), puis convoyé jusqu'à la tête de focalisation via une fibre optique.

Cependant, cette solution n'est pas non plus totalement satisfaisante au plan industriel.

En effet, il a été constaté qu'une découpe par faisceau laser obtenue avec une source laser de type Nd:YAG de longueur d'onde de 1.06 µm donne de mauvais résultats en termes de qualité et de vitesse de coupe.

En effet, les lasers de type Nd :YAG ont des facteurs de qualité inadaptés au processus de découpe laser. Les facteurs de qualité (BPP) de ces lasers sont typiquement de l'ordre de 15 mm.mrad à 30 mm.mrad suivant les sources. Or, plus le facteur de qualité d'un laser est élevé, plus le produit du diamètre de faisceau focalisé et de la divergence du faisceau est grande et moins le faisceau laser est efficace pour le processus de découpe laser.

De plus, la répartition transversale de l'énergie dans un faisceau laser Nd :YAG focalisé n'est pas gaussienne mais en créneau (ou « *top hat* » en anglais) et au-delà du point de focalisation, la répartition transversale de l'énergie est aléatoire.

D'une façon plus générale, le coupage par laser d'acier inoxydable avec des laser Nd :YAG est loin d'être évident lorsqu'on souhaite atteindre des vitesses et une qualité de coupe acceptables au plan industriel.

Par ailleurs, le document US-A-6,208,458 enseigne un procédé et un dispositif pour convertir les pulsations optiques générées par des sources de pompage à pulsations longues de basse intensité, tels des dispositifs laser à fibre, à diode ou solide, en pulsations optiques ultra-courtes de haute énergie utilisant des moyens d'amplification optiques. Les dispositifs laser à fibre cités sont de types à fibre dopée Er, Nd ou Yt. Les dispositifs laser décrits sont utilisables dans de nombreux domaines, notamment dans le domaine scientifique, médical et industriel, notamment pour percer, couper, souder, braser, machiner, traiter des surfaces, éliminer une peinture, en lithographie... des matériaux variés, tels que silices, acier, cuivre, or, polymères...

Le document US-A-2004/089643 décrit un procédé de fabrication de stent à partir d'un tube en acier inoxydable qui est découpé par un dispositif laser à fibre à une vitesse de 3 à 5 mm/sec.

Le document US-A-2005/169326 divulgue une architecture générant un faisceau laser de moins de 200 nm de longueur d'onde, notamment au moyen d'un dispositif laser à fibre dopée Nd et d'un second dispositif laser à fibre dopée Yb. Cette architecture est destinée à la photolithographie de semi-conducteurs.

Le document US-A-2005/041697 porte sur un laser à fibre dopée Yb portatif, utilisable en coupage laser, notamment d'acier doux, alors que le document WO-A-2005/074573 a trait à un amplificateur laser produisant une lumière de polarisation donnée utilisable notamment dans un laser à fibre dopée Er et/ou Yb.

Le problème qui se pose est alors de proposer un procédé amélioré et industriellement acceptable de découpe par faisceau laser des aciers inoxydables, lequel puisse permettre d'atteindre, selon l'épaisseur considérée, des vitesses allant jusqu'à 15 à 20 m/min, voire même davantage, et une bonne qualité de coupe, c'est-à-dire des faces de coupe droites, sans bavure et avec une rugosité réduite.

La solution de l'invention est alors un procédé de coupage par faisceau laser d'une pièce en acier inoxydable, selon la revendication 1.

Les moyens de génération de faisceau laser comprennent au moins un élément excitateur, de préférence plusieurs éléments excitateurs, coopérant avec au moins un élément excité, encore appelé milieu amplificateur, pour générer le faisceau laser. Les éléments excitateurs sont préférentiellement plusieurs diodes laser, alors que le ou les éléments excités est ou sont des fibres, de préférence en silice, à coeur d'ytterbium.

Dans le cadre de l'invention, on utilisera indifféremment les termes « moyens de génération de faisceau laser » et « résonateur ».

Selon le cas, le procédé de l'invention peut comprendre l'une ou plusieurs des caractéristiques suivantes :
- la (ou les) fibre(s) est formée d'un coeur dopé à l'ytterbium recouvert de silice.
- le faisceau laser généré par la fibre à base d'ytterbium a une longueur d'onde entre 1 et 5 µm, de préférence entre 1.04 et 3 µm.
- le faisceau laser généré par la fibre à base d'ytterbium a une longueur d'onde entre 1.07 et 1.09 µm, de préférence de 1.07 µm.
- le faisceau laser a une puissance comprise entre 0.1 et 25 kW, de préférence entre 0.5 et 15 kW.
- le faisceau laser est continu ou pulsé, de préférence continu.
- la pièce à couper à une épaisseur entre 0.40 et 20 mm.
- la vitesse de coupe est comprise entre 0.1 et 25 m/min, de préférence de 2 à 20 m/min.
- le gaz d'assistance du faisceau laser est choisi parmi l'azote, l'hélium, l'argon et leurs mélanges, et éventuellement, il contient, en outre, un ou plusieurs composés additionnels choisis parmi O₂, CO₂, H₂, CH₄...
- le facteur de qualité du faisceau laser est supérieur à 2 mm.mrad, de préférence supérieur à 3 mm.mrad, et/ou de inférieur à 7 mm.mrad, de préférence inférieur à 5 mm.mrad.
- plus généralement, la pression de gaz d'assistance est comprise entre environ 8 bar et 25 bar, et est choisie en fonction de l'épaisseur à couper.
- le diamètre de l'orifice d'injection du gaz est compris entre 0,5 et 4 mm, typiquement entre 1 et 3 mm ; le diamètre augmentant avec l'épaisseur de la pièce à couper.

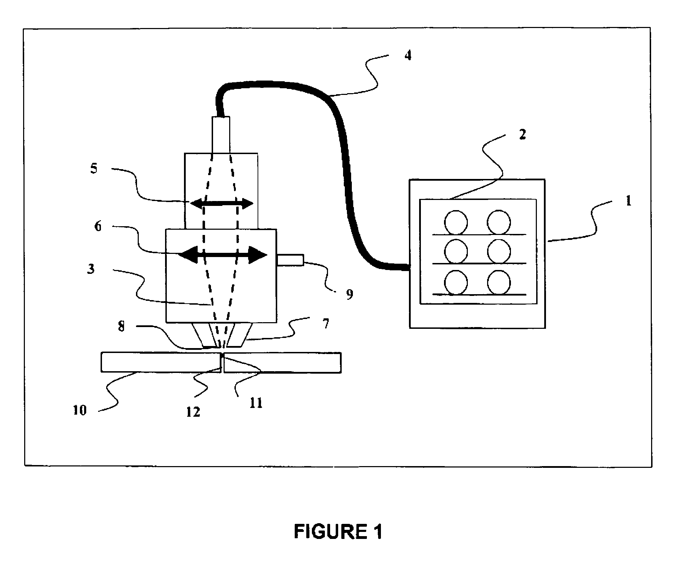

La Figure 1 ci-annexée est un schéma de principe d'une installation de mise en oeuvre d'un procédé de coupage par faisceau laser 3 d'une pièce 10 en acier inoxydable, mettant en oeuvre une source laser 1 à résonateur ou moyens de génération de faisceau 2 formé d'une fibre en silice à coeur dopé à l'ytterbium pour générer le faisceau laser 3.

La source laser 1 permet de générer un faisceau laser 3 de longueur d'onde comprise entre 1 µm et 5 µm, plus précisément à 1.07 µm.

Le faisceau 3 se propage jusqu'à la zone d'interaction 11 entre le faisceau 3 et la pièce 10, c'est-à-dire la zone où apparaît la saignée de coupe, à travers des moyens de convoyage de faisceau 4, telle qu'une fibre optique en silice fondue de diamètre compris 20 µm et 300 µm.

En sortie de cette fibre 4, le faisceau laser 3 possède des caractéristiques optiques particulières et un facteur de qualité (BPP) compris entre 1 et 8 mm.mrad.

Le faisceau 3 est ensuite collimaté avec un collimateur optique 5 équipé d'un doublet de collimation en silice fondu revêtue de manière à limiter la divergence du faisceau en sortie de fibre et le rendre le faisceau laser parallèle.

Le faisceau 3 parallèle, dont la divergence à été considérablement limitée par le collimateur, est ensuite focalisé sur ou dans la pièce 10 à couper par une lentille 6 en silice fondue revêtue de longueur focale comprise entre 80 mm et 510 mm, de préférence entre 100 mm et 250 mm.

Avant de venir frapper la pièce 10, le faisceau 3 traverse axialement la tête laser 5 équipée d'une buse 7 comprenant un orifice 8 de sortie axial situé en regard de la pièce à couper 10 par lequel passent le faisceau 3 et le gaz d'assistance. L'orifice de la buse peut être compris entre 0.5 mm et 5 mm de préférence entre 1 mm et 3 mm.

La tête laser 5 est alimentée, quant à elle, en gaz d'assistance via une entrée 9 de gaz, par exemple un gaz inerte tel l'azote, l'argon, l'hélium ou un mélange de plusieurs de ces gaz ou alors un gaz actif, tel l'oxygène par exemple, voire des mélanges de gaz actif et inerte.

Le gaz d'assistance sert à évacuer le métal en fusion hors de la saignée 12 de coupe se formant dans la pièce 10 lors du déplacement relatif de la pièce par rapport à la tête laser 5 selon la trajectoire de coupe désirée. La solution inverse consistant à bouger la tête de coupe en conservant la pièce statique donne le même résultat.

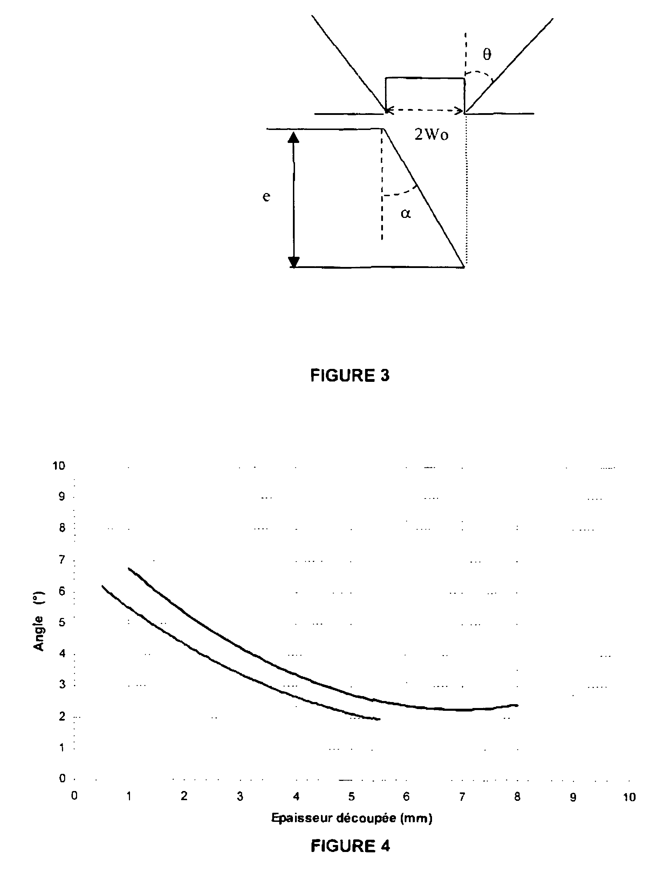

La Figure 3 est un schéma illustratif de la configuration en cours de coupage au niveau de la saignée de coupe (matériau d'épaisseur e), où ont été représentés l'angle θ de divergence du faisceau laser après focalisation, le diamètre 2Wo du faisceau focalisé et l'angle α du front avant de coupe.

Le facteur de qualité du faisceau ou BPP est défini comme étant le produit de l'angle θ de divergence par son rayon Wo.

Le processus de coupage est régi par l'absorption de l'énergie du faisceau laser dans le matériau au cours de la coupe. En fonction de la longueur d'onde du faisceau laser mis en oeuvre, il existe donc un angle optimal d'absorption de l'énergie par le matériau. En dehors de cet angle optimal, une part de l'énergie est reflétée et/ou perdue.

La Figure 3 illustre le fait qu'en condition optimale de coupe l'angle du front avant α correspond à une exposition de toute l'épaisseur e du matériau sous le faisceau de diamètre 2Wo.

La Figure 4 montre l'évolution de l'angle α optimum du front avant en fonction de l'épaisseur de coupe. La courbe supérieure correspond à celle obtenue avec un laser CO₂ de 4 kW en mode Tem 01*, alors que la courbe inférieure à celle obtenue avec un laser à fibre d'ytterbium de 2 kW selon l'invention. Les deux courbes ne sont pas confondues du fait de la différence d'angle d'absorption optimal de l'énergie à 10.6 µm, qui est la longueur d'onde du laser CO₂, et à 1.07 µm, qui est la longueur d'onde du laser fibre à ytterbium.

Au vu de ces courbes, il apparaît clairement que pour les faibles épaisseurs, l'angle optimal du front avant est plus important que pour des épaisseurs plus importantes. L'angle maximal de transmission de l'énergie laser à la matière est obtenu géométriquement et est la somme des angles α+θ.

On comprend alors que, lorsqu'on coupe des épaisseurs minces (quelques mm), il convient d'utiliser un angle de divergence de faisceau faible, c'est-à-dire un BPP petit, puisque le diamètre de spot est fixé par le diamètre de fibre utilisé, et ce, pour maintenir l'angle optimum d'absorption de l'énergie constant.

On en déduit aussi qu'au-delà d'une valeur de 8 mm.mrad, la transmission de l'énergie du faisceau à la matière devient moins efficace.

De là, dans le cadre de l'invention, on met en oeuvre un faisceau laser dont le facteur de qualité est préférentiellement compris entre 1 et 8 mm.mrad, de préférence encore entre 2 et 8 mm.mrad.

### Exemple

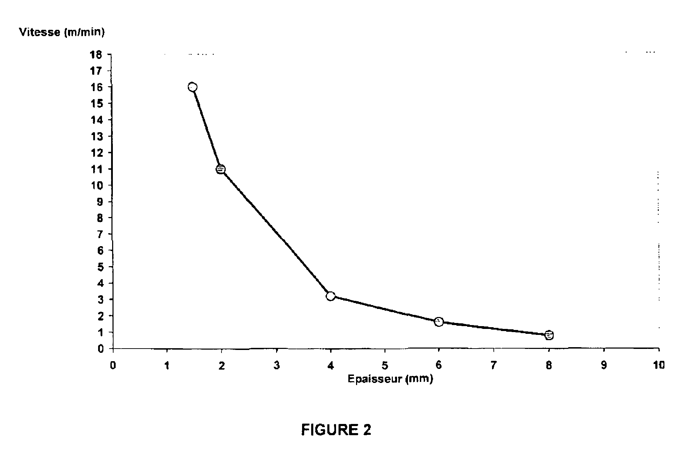

Afin de démontrer l'efficacité du procédé de l'invention, plusieurs essais de coupage de pièces en acier inoxydable ont été réalisés en utilisant un résonateur contenant un milieu amplificateur ou moyen de génération de faisceau composé de fibres optiques dont le coeur est dopé à l'ytterbium selon le procédé de l'invention et les résultats obtenus sont représentés sur la Figure 2.

Plus précisément, la source laser utilisée dans l'Exemple ci-après est composée d'un milieu amplificateur formé de fibres dopées à l'ytterbium et excitées par des diodes, de puissance 2 kW et de longueur d'onde égale à 1.07 µm, propagé dans une fibre optique de 100 µm en silice fondu revêtue, possédant un facteur de qualité (BPP) en sortie de fibre de 4 mm.mrad. Le collimateur situé en sortie de fibre est équipé d'un doublet de 55 mm de longueur focale.

Pour déterminer les plages de vitesses pouvant être atteintes avec le procédé de l'invention en fonction de l'épaisseur des pièces à couper, et de la pression et de la composition du gaz d'assistance mises en oeuvre, des essais de coupe ont été réalisés sur des pièces en acier inoxydable ayant des épaisseurs comprises entre 1.5 mm et 8 mm.

Le gaz utilisé est un gaz inerte, à savoir de l'azote, injecté dans la zone d'interaction du faisceau avec la pièce à des pressions variables comprises entre 8 et 25 bar selon le gaz utilisé, à travers des buses de découpe laser présentant des orifices de diamètres compris entre 0.5 et 4 mm selon le cas, typiquement entre 1 et 3 mm de diamètre. Plus l'épaisseur à couper est importante, plus le diamètre de buse doit être grand.

On a utilisé des lentilles de focalisation de longueur focale comprise entre 127 mm à 190.5 mm pour focaliser le faisceau laser généré par milieu amplificateur contenant des fibres dopées à l'ytterbium excitées par des diodes et acheminé jusqu'à la lentille de focalisation de la tête de coupe par des moyens de convoyage optique, telle une fibre optique de 100 µm de diamètre.

Plus précisément, les épaisseurs inférieures ou égales à 4 mm sont usuellement découpées avec des lentilles de focale de 127 mm et les épaisseurs plus élevées avec des lentilles de focale de 190.5 mm.

Les résultats obtenus avec une pression d'azote de 15 bar, qui ont été jugés satisfaisants du point de vue de la qualité de coupe obtenue sont consignés sur la Figure 2 ci-jointe où l'on a représenté la vitesse obtenue (axe des ordonnées) en fonction de l'épaisseur à découper (axe des abscisses).

On voit que le procédé de l'invention permet d'obtenir une vitesse de l'ordre de 16 m/min sur une pièce de 2 mm d'épaisseur, dans les conditions expérimentales ci-avant. Néanmoins, on voit aussi que la vitesse de coupe décroît logiquement avec une augmentation l'épaisseur du matériau découpé.

Après examen des faces coupées, il est à souligner que la qualité des coupes obtenues est très satisfaisante, en termes de bavures et striations, et ce, pour toutes les épaisseurs coupées. Toutefois, l'épaisseur maximale découpée dans les conditions expérimentales susmentionnées est de 8 mm avec la puissance laser mise en oeuvre ici.

Le procédé de l'invention est donc efficace tant en terme de vitesse de coupe qu'en termes de qualité de coupe sur l'acier inoxydable.

## Revendications

1. Procédé de coupage par faisceau laser (3) d'une pièce (10) en acier inoxydable, dans lequel on utilise des moyens de génération (1, 2) de faisceau laser (3) comprenant au moins une fibre contenant de l'ytterbium pour générer le faisceau laser (3) servant à fondre la pièce (10) et à ainsi réaliser la découpe proprement-dite, **caractérisé en ce que**
- le facteur de qualité du faisceau laser (3) est compris entre 1 et 8 mm.mrad et
- la pièce (10) à couper à une épaisseur entre 0.40 et 30 mm.

2. Procédé selon la revendication 1, **caractérisé en ce que** la fibre est formée d'un coeur dopé à l'ytterbium recouvert de silice

3. Procédé selon l'une des revendications 1 ou 2, **caractérisé en ce que** le faisceau laser (3) généré par la fibre à base d'ytterbium a une longueur d'onde entre 1 et 5 µm, de préférence entre 1.04 et 3 µm.

4. Procédé selon l'une des revendications 1 à 3, **caractérisé en ce que** le faisceau laser (3) généré par la fibre à base d'ytterbium a une longueur d'onde entre 1.07 et 1.09 µm, de préférence de 1.07 µm.

5. Procédé selon l'une des revendications 1 à 4, **caractérisé en ce que** le faisceau laser (3) a une puissance comprise entre 0.1 et 25 kW, de préférence entre 0.5 et 15 kW.

6. Procédé selon l'une des revendications 1 à 5, **caractérisé en ce que** le faisceau laser (3) est continu ou pulsé, de préférence continu.

7. Procédé selon l'une des revendications 1 à 6, **caractérisé en ce que** la pièce (10) à couper à une épaisseur entre 0.40 et 20 mm.

8. Procédé selon l'une des revendications 1 à 7, **caractérisé en ce que** la vitesse de coupe est comprise entre 0.1 et 25 m/min, de préférence de 2 à 20 m/min.

9. Procédé selon l'une des revendications 1 à 8, **caractérisé en ce que** le gaz d'assistance du faisceau laser (3) est choisi parmi l'azote, l'hélium, l'argon et leurs mélanges, et éventuellement, il contient, en outre, un ou plusieurs composés additionnels choisis parmi O₂, CO₂, H₂ et CH₄.

10. Procédé selon l'une des revendications 1 à 9, **caractérisé en ce que** le facteur de qualité du faisceau laser (3) est supérieur à 2 mm.mrad, de préférence supérieur à 3 mm.mrad,

11. Procédé selon l'une des revendications 1 à 10, **caractérisé en ce que** le facteur de qualité du faisceau laser (3) est inférieur à 7 mm.mrad, de préférence inférieur à 5 mm.mrad.

## Claims

1. Laser (3) cutting process for cutting a stainless steel workpiece (10), in which means (1, 2) for generating a laser beam (3) comprising at least one ytterbium-containing fibre for generating the laser beam (3), serving to melt the workpiece and thus carrying out the actual cutting, are used, **characterized in that**:
- the quality factor of the laser beam (3) is between 1 and 8 mm.mrad; and
- the workpiece (10) to be cut has a thickness of between 0.40 and 30 mm.

2. Process according to Claim 1, **characterized in that** the fibre is formed from an ytterbium-doped core clad with silica.

3. Process according to either of Claims 1 and 2, **characterized in that** the laser beam (3) generated by the ytterbium-based fibre has a wavelength of between 1 and 5 µm, preferably between 1.04 and 3 µm.

4. Process according to one of Claims 1 to 3, **characterized in that** the laser beam (3) generated by the ytterbium-based fibre has a wavelength of between 1.07 and 1.09 µm, preferably of 1.07 µm.

5. Process according to one of Claims 1 to 4, **characterized in that** the laser beam (3) has a power of between 0.1 and 25 kW, preferably between 0.5 and 15 kW.

6. Process according to one of Claims 1 to 5, **characterized in that** the laser beam (3) is a continuous or pulsed laser beam, preferably a continuous laser beam.

7. Process according to one of Claims 1 to 6, **characterized in that** the workpiece (10) to be cut has a thickness of between 0.40 and 20 mm.

8. Process according to one of Claims 1 to 7, **characterized in that** the cutting speed is between 0.1 and 25 m/min, preferably from 2 to 20 m/min.

9. Process according to one of Claims 1 to 8, **characterized in that** the assistance gas for the laser beam (3) is chosen from nitrogen, helium, argon and mixtures thereof, and, optionally, it further contains one or more additional compounds chosen from O₂, CO₂, H₂ and CH₄.

10. Process according to one of Claims 1 to 9, **characterized in that** the quality factor of the laser beam (3) is greater than 2 mm.mrad, preferably greater than 3 mm.mrad.

11. Process according to one of Claims 1 to 10, **characterized in that** the quality factor of the laser beam (3) is less than 7 mm.mrad and preferably less than 5 mm.mrad.

## Patentansprüche

1. Verfahren zum Laserschneiden (3) eines Werkstücks (10) aus nichtrostendem Stahl, wobei Mittel (1, 2) zum Erzeugen eines Laserstrahls (3) verwendet werden, die mindestens eine Faser umfassen, die Ytterbium enthält, um den Laserstrahl (3) zu erzeugen, der zum Schmelzen des Werkstücks und somit zur Durchführung des eigentlichen Schneidens dient, **dadurch gekennzeichnet, dass**:
- der Qualitätsfaktor des Laserstrahls (3) im Bereich zwischen 1 und 8 mm.mrad liegt und
- das zu schneidende Werkstück (10) eine Dicke zwischen 0.40 und 30 mm aufweist.

2. Verfahren nach Anspruch 1, **dadurch gekennzeichnet, dass** die Faser aus einem Kern gebildet ist, der mit Ytterbium dotiert, das mit Siliciumdioxid überzogen ist.

3. Verfahren nach einem der Ansprüche 1 oder 2, **dadurch gekennzeichnet, dass** der Laserstrahl (3), der von der Faser auf Ytterbium-Basis gebildet wird, eine Wellenlänge zwischen 1 und 5 µm, bevorzugt zwischen 1,04 et 3 µm aufweist.

4. Verfahren nach einem der Ansprüche 1 bis 3, **dadurch gekennzeichnet, dass** der Laserstrahl (3), der von der Faser auf Ytterbium-Basis gebildet wird, eine Wellenlänge zwischen 1,07 und 1,09 µm, bevorzugt 1,07 µm aufweist.

5. Verfahren nach einem der Ansprüche 1 bis 4, **dadurch gekennzeichnet, dass** der Laserstrahl (3) eine Leistung im Bereich zwischen 0,1 und 25 kW, bevorzugt zwischen 0,5 und 15 kW aufweist.

6. Verfahren nach einem der Ansprüche 1 bis 5, **dadurch gekennzeichnet, dass** der Laserstrahl (3) kontinuierlich oder gepulst, bevorzugt kontinuierlich ist.

7. Verfahren nach einem der Ansprüche 1 bis 6, **dadurch gekennzeichnet, dass** das zu schneidende Werkstück (10) eine Dicke zwischen 0,40 und 20 mm aufweist.

8. Verfahren nach einem der Ansprüche 1 bis 7, **dadurch gekennzeichnet, dass** die Schnittgeschwindigkeit im Bereich zwischen 0,1 und 25 m/min, bevorzugt zwischen 2 und 20 m/min liegt.

9. Verfahren nach einem der Ansprüche 1 bis 8, **dadurch gekennzeichnet, dass** das Prozessgas des Laserstrahls (3) aus Stickstoff, Helium, Argon und deren Gemischen ausgewählt ist, und gegebenenfalls ferner ein oder mehrere zusätzliche Verbindungen enthält, ausgewählt aus O₂, CO₂, H₂ und CH₄.

10. Verfahren nach einem der Ansprüche 1 bis 9, **dadurch gekennzeichnet, dass** der Qualitätsfaktor des Laserstrahls (3) größer als 2 mm.mrad, bevorzugt größer als 3 mm.mrad ist.

11. Verfahren nach einem der Ansprüche 1 bis 10, **dadurch gekennzeichnet, dass** der Qualitätsfaktor des Laserstrahls (3) kleiner als 7 mm.mrad, bevorzugt kleiner als 5 mm.mrad ist.
